# EUROPEAN PATENT APPLICATION

(11) **EP 4 592 630 A1**
(43) Date of publication of application: **30.07.2025**
(21) Application number: 25151274.5
(22) Date of filing: 10.01.2025
(51) Int. Cl.: F28D 21/00

(54) **DRAINING DEVICE AND METHOD THEREFOR**

(30) Priority: 17.01.2024 NL 2036823
(71) Applicant: Counter Flow Products B.V., 7475 PB Markelo (NL)
(72) Inventor: De Wit, Gertjan Jelle, Markelo (NL)
(74) Representative: Arnold & Siedsma

(57) **Abstract**

The present invention relates to a draining device (2,102,202,302) configured to recover heat from used shower water, wherein the draining device (2,102,202,302) comprises:
- a drain (6,106,206,306) which is provided with a drain height (H1), wherein draining openings (8,108,208,308) are arranged in a lowest part (7) of the drain; and
- a heat exchanger (10,110,210,310) which is arranged under the drain (6,106,206,306) and which is provided with at least one tube (12,112,212,312), wherein the tube is positioned substantially under the draining openings such that shower water flows through the draining openings and onto the tube of the heat exchanger during use,

wherein the draining openings are formed such that, during use, a height of a water level (H2, H3)) of the shower water situated in the drain is at least half the drain height.

## Description

The present invention relates to a draining device which is configured to recover heat from used shower water. The invention further relates to a shower tray provided with such a draining device, and a shower provided with such a draining device or a shower tray. The invention further relates to a method for recovering heat.

A shower tray is a part of a shower cubicle or a walk-in shower. It is usually a shallow, watertight tray designed to collect and discharge water during showering. The shower tray can be made of different materials, for instance acrylic, glass fibre, ceramic material or composite materials. The shower tray is provided with a substantially flat bottom in which a slope toward the drain is formed. The used shower water can be discharged by the drain.

EP 2 453 194 A1 describes a drain for a shower, wherein the drain is provided with a heat exchanger. The heat exchanger is arranged under a grating. The grating is provided with openings through which the water can flow onto a heat exchanger. The grating defines a drain which is provided with a downward-directed recess and a protrusion arranged partially in the recess and forming a stench trap. The openings in the grating are positioned higher than the lowest part of the recess.

A drawback of the known device is that the efficiency of the exchange of heat of the shower water and the heat exchanger is low, particularly in the case of a brief shower.

The present invention has for its object to obviate or at least reduce the above stated problems. It can be a particular object of the invention to provide a draining device which realizes an efficient heat exchange between the shower water and the heat exchanger during a brief shower as well.

This object is achieved with a draining device for recovering heat from used shower water, wherein the draining device comprises:
- a drain which is provided with a drain height, wherein draining openings are arranged in a lowest part of the drain; and
- a heat exchanger which is arranged under the drain and which is provided with at least one tube, wherein the tube is positioned substantially under the draining openings such that shower water flows through the draining openings and onto the tube of the heat exchanger during use,
wherein the draining openings are formed such that, during use, a height of a water level of the shower water situated in the drain is at least half the drain height.

An advantage of the draining openings being formed such that, during use, a height of the water level amounts to at least half the drain height is that water will flow over the whole heat exchanger when the device is placed non-horizontally as well. For an optimal heat exchange between the used shower water and the heat exchanger it is important that the whole heat exchanger be used. The minimum height of the water level ensures that, even if one side is placed higher than a lower-lying side, water will flow through the drain and then onto the heat exchanger on the higher-lying side. This increases the efficiency of the draining device according to the invention.

It is thus possible for a higher-lying side to be placed 4 millimetres higher than the lower-lying side. With a water level of at least half the drain height it is achieved, in the case that the draining device were to be disposed horizontally, that the higher-lying side also contains a substantial layer of water.

A further advantage is that the draining openings in the drain are arranged on the lowest part of the drain, whereby used shower water flows onto the heat exchanger immediately upon the drain filling up. Heat exchange between the shower water and the heat exchanger is hereby realized immediately. This increases efficiency, since the temperature of the used shower water drops less owing to the relatively brief contact with the surrounding area. It is an alternative or additional advantage that, in the case of a brief shower, heat exchange does take place, because filling of a stench trap is for instance not necessary.

Yet another advantage of the invention is that the heat exchanger with the draining device according to the invention is placeable upstream of the stench trap. A leak in the heat exchanger will hereby be noticed more quickly. A further advantage is that the closure of the drain need not necessarily be made gas-tight, since the heat exchanger is not placed in the sewer.

The minimum water level is realized by the passage area of the draining openings. The water will initially accumulate in the drain due to the passage area. The higher water level increases the pressure of the water, and thereby increases the throughflow rate through the draining openings. After a determined period of time the water level is such that the throughput rate through the draining openings is substantially equal to the feed rate of used shower water.

Yet another advantage is that the heat exchanger can be cleaned in simple manner.

The tube of the heat exchanger can also be a pipe, channel or conduit. In the context of the present application a tube must be understood to mean an elongate element suitable for passage of a liquid. A tube must also be understood to mean a channel formed by a dimple plate. A dimple plate is provided with two stainless steel plates which are welded to each other with a determined pattern. After the two stainless steel plates have been pressurized with a determined fluid, space is created between the plates by expansion of the space between the two plates. The welding pattern can be applied to the two plates such that, after expansion, a spiral-shaped channel is formed in the dimple plate.

An advantage of a dimple plate is that manufacture thereof is inexpensive, this reducing the production costs for the draining device as a whole.

The draining device can be arranged in a housing. The housing can form part of a shower tray. In an embodiment the drain is embodied as a continuous drain positioned out of the centre of the housing. A continuous drain is understood to mean a drain which is closed. Examples of continuous drains are circular drains, elliptical drains, square drains, or square drains with rounded corners.

In an embodiment according to the invention a ratio between the height of the water level during use and the drain height is at least 0.6, preferably at least 0.7, and is most preferably at least 0.8.

Said ratio of the height of the water level during use to the drain height ensures that, during use, there is a layer of water at every location in the drain in the case of oblique placing as well, i.e. when the drain as a whole is not placed parallel to a horizontal. This realizes use of the whole surface area of the heat exchanger, which results in an efficient heat exchange between the used shower water and the heat exchanger.

In an embodiment according to the invention the draining openings together have an overall passage area, wherein the overall passage area of the draining openings lies in the range of 500-800 mm², preferably in the range of 650-750 mm², and most preferably in the range of 600-700 mm², for instance 650 mm², such that said water level of the shower water is achieved during use at a flow rate of the shower water in the range of 8-14 litres/minute.

The flow rate preferably lies in the range of 9.2 to 12.5 litres per minute, this corresponding with tapping class CW3 and tapping class CW4 of the NTA 8800 standard.

Experiments have shown that with a total number of draining openings of 94 with a diameter of 3.0 mm, wherein the overall passage area of the draining openings therefore amounts to 664 mm², and a supplied flow rate of 9.2 l/min, the drain fills up to a height of about 7.5 mm. At a supplied flow rate of 12.5 l/min the height of the water level becomes about 14 mm. If the drain height is 15 millimetres, the drain will not overflow. It is realized here that water will be situated at every location in the drain in the case of non-level placings as well.

It will be apparent to the skilled person that the water level of at least half the drain height will be achieved by said overall passage areas and said flow rates of the shower water.

In other words, the terminology such that said water level of the shower water is achieved during use at a flow rate of the shower water in the range of 8-14 litres/minute means that a shower is configured to supply shower water at a flow rate of 8-14 litres per minute. Alternatively, it can be described as the shower water having a flow rate of 8-14 litres per minute during use.

A flow rate of 8-14 litres per minute converts into a flow rate of 0.00013 - 0.00023 m³ per second. A flow rate of 9.2 to 12.5 litres per minute converts into a flow rate of 0.00015 - 0.00021 m³ per second.

In an embodiment according to the invention the draining device is arranged in a housing, wherein the drain is embodied as a continuous drain positioned around the centre of the housing, wherein the drain follows an outer edge of the housing.

Following the outer edge of the housing results in the length of the heat exchanger, which is placed under the draining openings of the drain, being maximized. The largest possible exchanging surface area is created hereby, this enhancing the exchange of heat.

In an embodiment according to the invention the outer edge of the housing is rectangular.

In this embodiment the drain, and thereby the heat exchanger, is preferably rectangular, optionally with rounded corners.

In an embodiment according to the invention the draining openings are elongate and extend in a direction equal to the direction in which the drain extends.

An advantage hereof is that the draining openings are easier to clean, since the bristles of a cleaning brush can be moved through the holes. In that case the bristles of the cleaning brush are preferably moved in the elongate direction of the draining openings.

In an embodiment according to the invention the draining device further comprises a covering arranged above the drain.

The covering can be a grating, for instance a decorative grating. The covering prevents dirt from gathering on the openings of the grating. This keeps the throughflow of the shower water through the drain to the heat exchanger intact for longer. A further advantage of the covering is that it can be disposed releasably above the drain in simple manner, making the covering easy to clean.

In an embodiment according to the invention the covering has a reverse U-shape, wherein the U-shape comprises two legs which are connected by a middle part and wherein the legs extend downward from the middle part.

A distance to the drain is realized by the legs of the U-shape. This creates a drain space which is located under the covering and where a water level is able to position itself during use. A further advantage of the U-shape, wherein the legs extend downward, preferably perpendicularly of the middle part, is that no sharp edges are created on the upper side. A user can hereby step onto the covering without risk.

In an embodiment according to the invention the covering is provided with openings in the middle part of the covering.

Owing to openings in the middle part of the covering, the used shower water can flow through the covering and to the drain in simple manner.

In an embodiment according to the invention the covering is provided with openings in the legs of the covering.

Owing to the openings in the legs, the upper side, which the user looks onto and may stand on, is free from openings. An advantage is that the user catching or bumping their toes on or against the openings in the covering is prevented. This alternatively or additionally improves the aesthetics of the draining device.

In an embodiment according to the invention the draining device comprises a housing and arranged thereon a cover configured to support a showering person.

The cover can form the bottom of the shower tray. The housing can form part of the shower tray. The cover is preferably substantially smooth plate. The cover can have any geometric form. The cover preferably covers the heat exchanger at least partially.

In an embodiment according to the invention the cover is arranged overhanging the drain.

The cover being arranged in overhanging manner as it were conceals the drain. The concealed drain reduce the chances of a showering person stepping into the drain. This reduces the chances of accidents during showering.

In an embodiment according to the invention the cover is domed.

In the context of the present application domed means that an element takes a curved form. In use the dome, i.e. the curved form, is directed upward. Directed upward means counter to the direction of the force of gravity, or in the direction of the shower jet.

An advantage of the cover being domed is that the cover thereby obtains more load-bearing capacity. This increases the lifespan of the cover. Alternatively or additionally, sufficient load-bearing capacity can be realized with less material.

Yet another advantage of the cover being domed is that the surface of the cover slopes downward toward the drain. The surface of the cover slopes downward, whereby the used shower water will automatically flow to the drain under the influence of the force of gravity.

In an embodiment according to the invention the cover comprises a water cavity which is positioned on an underside of the cover, wherein the water cavity is preferably positioned substantially vertically above the drain.

The water cavity is a recess in the underside of the cover. The water cavity can be a groove or slot arranged on the underside of the cover.

The water cavity prevents the water from moving over the underside beyond the water cavity. The water cavity breaks the adhesion between the water and the underside of the cover, causing the water to drip down. An advantage of positioning the water cavity substantially vertically above the drain is that the water hereby drips directly onto the drain and so can flow to the heat exchanger. In a preferred embodiment the water cavity is positioned substantially vertically above the draining openings of the drain.

In an embodiment according to the invention the cover is connected releasably to a housing.

The cover being connected releasably to the housing makes the heat exchanger easily accessible. This facilitates cleaning, maintenance and/or replacing of the heat exchanger of the draining device according to the invention. Cleaning, maintenance and/or replacing of the cover is alternatively or additionally simpler.

In an embodiment according to the invention the openings are formed such that the shower water flows onto the tube of the heat exchanger in dropwise manner.

The used shower water flowing dropwise onto the tube results in a minimal quantity of water being arranged on the tube of the heat exchanger at a time. The boundary layer, i.e. the thickness of the water around the tube, is hereby kept as small as possible. This provides for an effective heat transfer from the water to the heat exchanger.

In an embodiment according to the invention the number of draining openings lies in the range of 60 to 120, preferably in the range of 70 to 110, and most preferably in the range of 80 to 100, and wherein a passage area of the openings lies in the range of 3 to 20 mm², preferably in the range of 5 to 15 mm², most preferably in the range of 6 to 8 mm².

The passage area of the draining openings is understood to mean the passage area of individual openings. With the above stated number of openings in combination with the passage area it is achieved that the water level amounts to at least half the drain height during normal use of the shower. Normal use of the shower can for instance be a flow rate of 8-11 litres per minute. A non-level placing of the draining device can be compensated thereby.

Alternatively or additionally, a good compromise between sufficient throughflow and a sufficiently large passage area is achieved by said passage areas. This is because, if the passage area is too small, the draining opening will already become blocked by a small amount of dirt. Blockage is therefore prevented by said passage area.

In an embodiment according to the invention the overall passage area of the draining openings lies in the range of 180-2400 mm², preferably in the range of 350-1650 mm², and most preferably in the range of 480-800 mm².

The above stated overall, i.e. combined, passage area of the draining openings realizes the desired water level in normal use.

In an embodiment according to the invention the draining openings of the drain are distributed uniformly over the drain in one row, one behind the other.

Placing the draining openings in one row enables the draining openings to be arranged in the lowest part of the drain in simple manner.

In an embodiment according to the invention the draining openings are slotted, wherein the longitudinal direction of the draining openings preferably extends in the peripheral direction of the drain.

Making the draining openings slotted enables the drain to be cleaned in simple manner with a brush. This is realized in that the bristles of the brush move through the slot when the brush moves through the drain, and so carry along any dirt located in the draining openings.

In the context of the present application slotted is understood to mean a form wherein an opening has a determined width and extends over a determined length, wherein the determined length is greater than the width. The ratio of the determined width to the determined length is for instance greater than 1:2, preferably greater than 1:3, and most preferably greater than 1:5.

In an embodiment according to the invention the tube of the heat exchanger is spiral-shaped, wherein the tube preferably comprises three windings.

The spiral-shaped heat exchanger is particularly advantageous in combination with a continuous drain. Owing to the spiral shape, the heat exchanger can be arranged under the whole drain. An additional advantage of the three windings is that a good balance is hereby achieved between absorption of heat of the water by the heat exchanger and a relatively low height of the shower tray in which the draining device is placed.

The number of windings of the spiral-shaped heat exchanger is adjustable on the basis of the desired efficiency, wherein a greater number of windings results in a higher efficiency.

The windings of the heat exchanger are preferably placed substantially one above the other, in line. After having relinquished its heat to a first winding, a droplet of used shower water hereby moves to a second winding, lying under the first winding, under the influence of the force of gravity.

In an embodiment according to the invention the width of the drain lies in the range of 1-5 cm, preferably in the range of 2-4 centimetres, and is most preferably 3 centimetres.

Said widths of the drain result in a drain which has a sufficient throughflow and is easy to clean.

The invention further relates to a shower tray provided with a draining device according to the invention.

The shower tray has similar advantages and effects as described for the draining device.

The invention further relates to a shower provided with a draining device according to the invention and/or a shower tray according to the invention.

The shower has similar advantages and effects as described for the draining device and the shower tray.

The invention further relates to a method for recovering heat, comprising of:
- providing a draining device according to the invention, a shower tray according to the invention and/or a shower according to the invention; and
- using the shower, whereby shower water flows through the openings in the drain onto the tube of the heat exchanger.

The method has similar advantages and effects as described for the draining device, the shower tray and/or the shower.

Further features, advantages and details of the invention are described on the basis of embodiments thereof, wherein reference is made to the accompanying drawings, in which:
- figure 1 shows a perspective view of a first example of a shower tray according to the invention;
- figure 2 shows an exploded view of a first example of a shower tray according to the invention;
- figure 3 shows a perspective view of a first example of a shower tray according to the invention;
- figure 4 shows a perspective view of a second example of a shower tray according to the invention;
- figure 5 shows an exploded view of a second example of a shower tray according to the invention;
- figure 6 shows a perspective view of a second example of a shower tray according to the invention;
- figure 7 shows a perspective view of a third example of a shower tray according to the invention;
- figure 8 shows an exploded view of a third example of a shower tray according to the invention;
- figure 9 shows a perspective view of a third example of a shower tray according to the invention;
- figure 10 shows a side view of a third example of a shower tray according to the invention;
- figure 11 shows a side view of a fourth example of a shower tray according to the invention;
- figure 12 shows a top view of a first drain according to the invention;
- figure 13 shows a schematic representation of a shower according to the invention;
- figure 14 shows a schematic side view of a drain and a cover according to the invention;
- figure 15 shows a perspective view of a heat exchanger according to the invention; and
- figure 16 shows a top view of a second drain according to the invention.

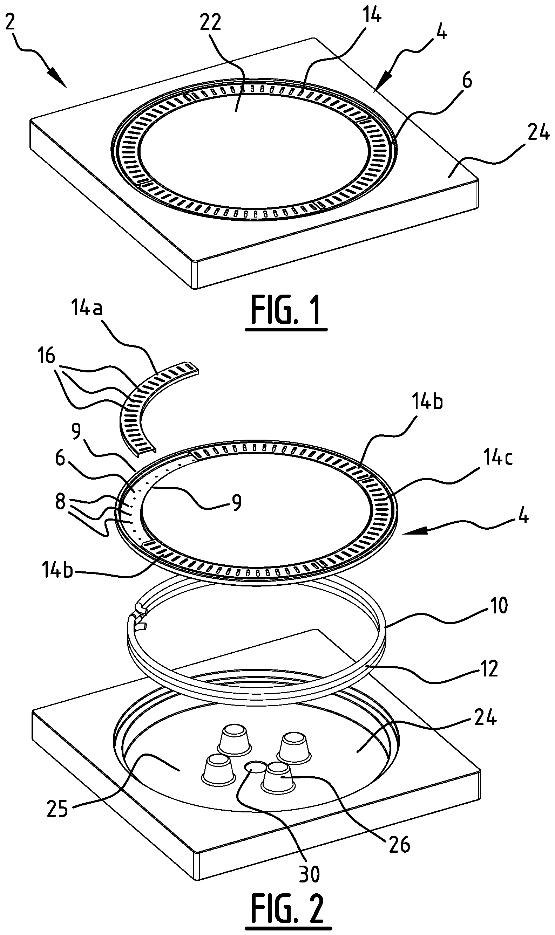

Shower tray 2 (figure 1) comprises draining device 2. Draining device 2 is provided with drain 6. Draining openings 8 are arranged in lowest part 7 of drain 6. In the shown embodiment drain 6 is a continuous circular drain. Draining openings 8 are here arranged one behind the other in one row in drain 6. Cover 22 is arranged in the centre of drain 6. Cover 22 is placed on housing 24 of shower tray 2. In the shown embodiment cover 22 and drain 6 are connected fixedly to each other. It will be apparent to the skilled person that this is not essential, and drain 6 and cover 22 can also be provided in shower tray 2 as separate elements.

Covering 14 is arranged above drain 6 (figure 2). Covering 14 is placed over drain 6 so that drain 6 is covered. Just as drain 6, covering 14 is also continuous and circular. Covering 14 comprises covering parts 14a, 14b, 14c, 14d which each describe a quarter-circular arc, whereby four covering parts 14a, 14b, 14c, 14d comprise the whole circle. Covering 14 is provided with openings 16. Openings 16 have an elongate form, wherein the longitudinal axis of openings 16 extends in radial direction of drain 6 and covering 14.

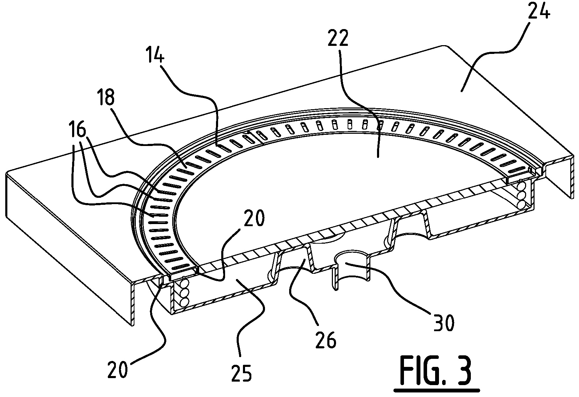

Heat exchanger 10 is disposed under drain 6 (figure 3). Heat exchanger 10 comprises tube 12 which, as seen from above, is also continuous and circular. Heat exchanger 10 is disposed such that tube 12 is positioned vertically under draining openings 8 of drain 6. This ensures that the droplets of used shower water from draining openings 8 spread uniformly over the surface of tube 12.

Covering 14 comprises middle part 18 and legs 20. Legs 20 are each disposed at an end of middle part 18, parallel to each other. Middle part 18 and legs 20 hereby form as it were a U-shape. Legs 20 extend downward and rest with their free end on drain 6. The overall passage area of openings 16 of covering 14 is greater than the overall passage area of draining openings 8 of drain 6, whereby the effective throughflow of used shower water through draining openings 8 is determined solely by the dimensions of draining openings 8.

In the shown embodiment cover 22 rests on support elements 26. Support elements 26 are placed on lower plate 25 of housing 24. In the shown embodiment support elements 26 are embodied as four truncated cones. Cover 22 is provided on its underside with four recesses (not shown), wherein each recess is associated with a separate support element 26. Discharge 30 is arranged in the centre of lower plate 25. Discharge 30 is configured to discharge the shower water from which the heat has already been extracted by heat exchanger 12 to the sewer.

In an alternative embodiment according to the invention draining device 2 is embodied just as it is in figures 1-3, with the exception that no covering 14 is provided. This has the result that drain 6 is exposed, as it were. An advantage of this embodiment is that there is less risk of blockage, and cleaning of the draining device is simpler.

Shower water will in principle fall onto cover 22 first, after which it flows through openings 16 of covering 14 into drain 6. In drain 6 the specific dimensions of draining openings 8 create a water level during showering. The used shower water flows through draining openings 8 and onto tube 12 of heat exchanger 10 in dropwise manner. The used shower water then flows onto lower plate 25 of housing 24 and is then discharged via discharge 30.

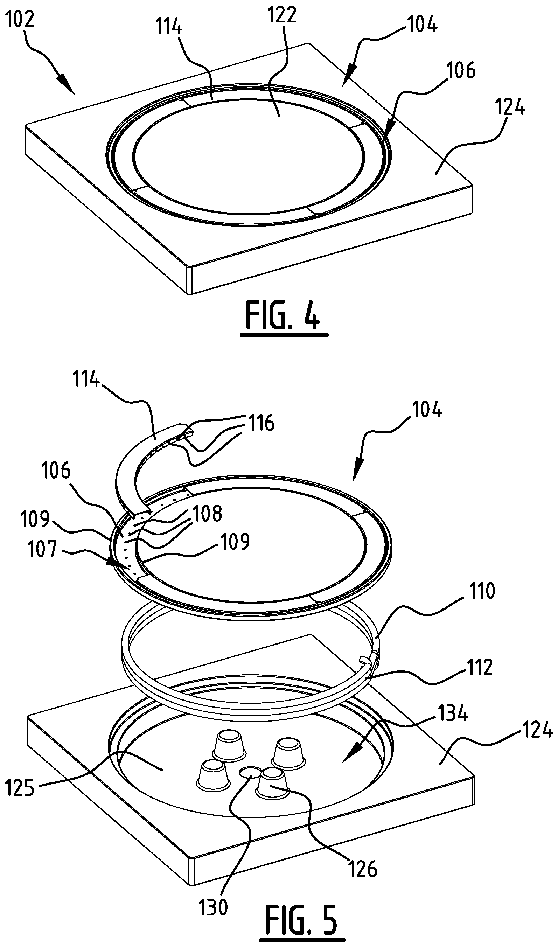

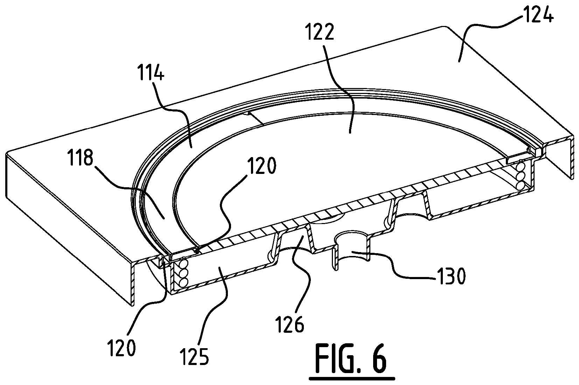

Shower tray 102 provided with draining device 102 (figures 4-6) has many similarities to draining device 2 of figures 1-3. Covering 114 takes the same form as covering 14, which means that covering 114 also comprises middle part 118 and legs 120. Legs 120 are each disposed at an end of middle part 118, parallel to each other. Hereby, middle part 118 and legs 120 form a U-shape. Legs 120 extend downward and rest with their free end on drain 106. A difference with covering 4 is that openings 116 are arranged not on middle part 118 but on legs 120. Middle part 118 is hereby free of openings, this preventing a user from possibly catching a toe in covering 114.

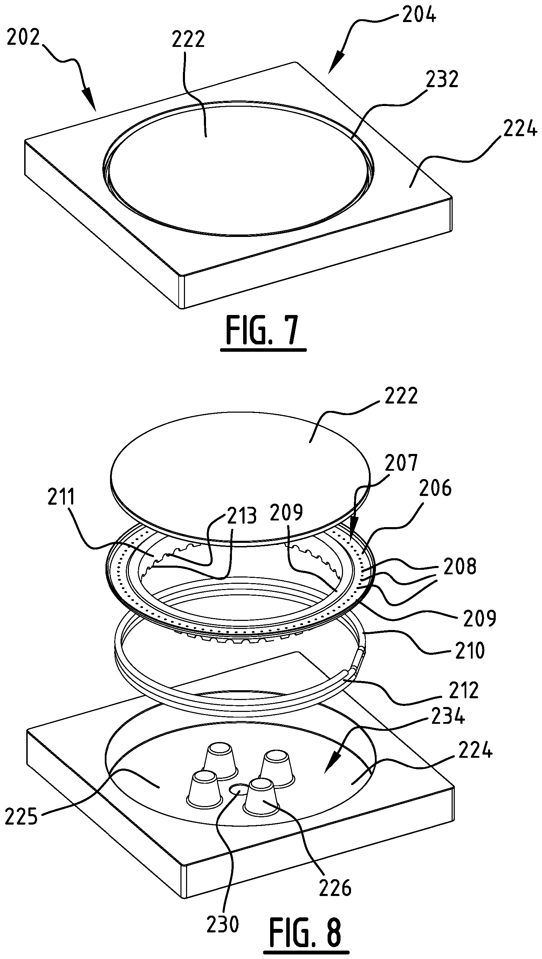

Shower tray 202 (figure 7) is provided with draining device 204, this also comprising cover 222 and housing 224. Cover 222 is circular and has a diameter smaller than the diameter of circular recess 234 in housing 224. This results in slit 232 which is positioned between housing 224 and the peripheral edge of cover 222. The used shower water, which falls onto cover 222 first, can be discharged through slit 232.

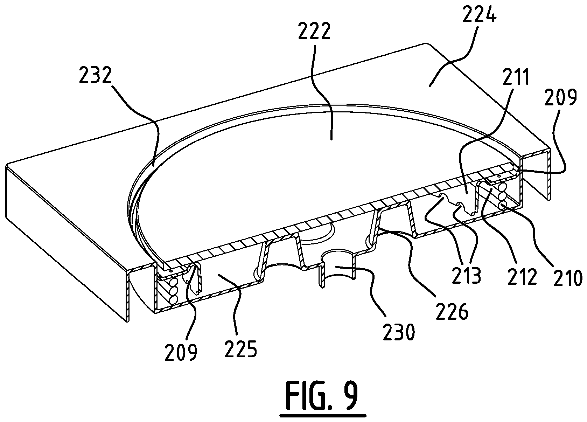

Drain 206 is arranged under cover 222 (figures 8 and 9). Just as drain 6 and drain 106, drain 206 is provided with draining openings 208 which are arranged one behind the other in lowest part 207 of drain 206. Drain 206 comprises two upright edges 209, between which lowest part 207 is disposed. On the inner side of drain 206 support wall 211 extends downward from upright edge 209. Support wall 211 has a height which is equal at least to the height of heat exchanger 210. Notches 213 are arranged on the underside of support wall 211. Liquid passage is realized by notches 213. The shower water which has flowed through draining openings 208 can hereby flow through notches 213, over lower plate 225 to discharge 230.

Support wall 211 supports on lower plate 225 of housing 224, such that drain 206 is positioned above heat exchanger 210 and under cover 222. In the shown embodiment cover 222 supports on support parts 226. It is however also possible for cover 222 to support on inner edge 209, from where support wall 211 extends downward. In this embodiment support parts 226 are not needed, and lower plate 225 takes a substantially flat form.

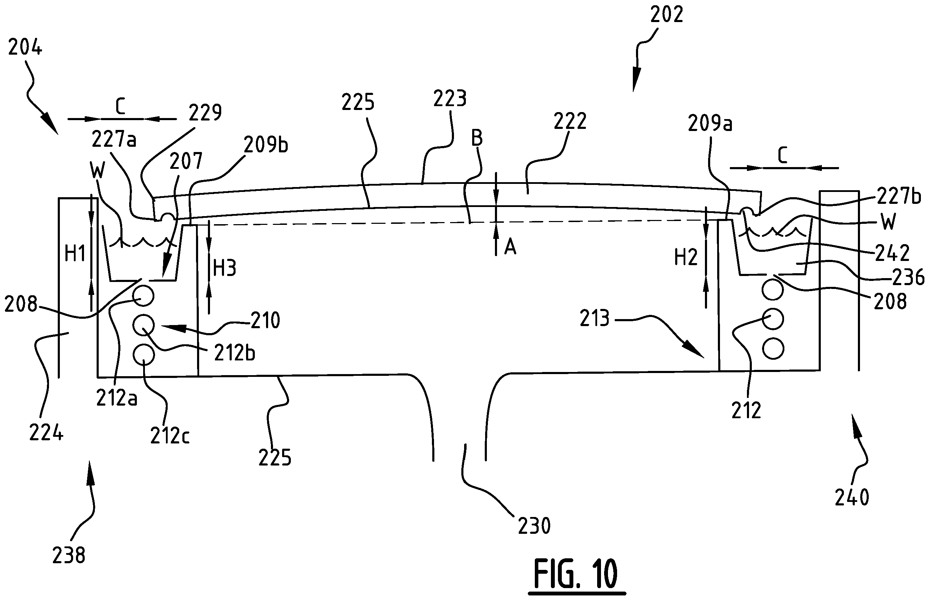

Draining device 204 (figure 10) is arranged in housing 224 of shower tray 202. Draining device 204 is provided with drain 206 which is formed by upright edges 209 between which lowest part 207 of drain 206 is located. Arranged in lowest part 207 are draining openings 208 through which water 236 drips onto tube 212 of heat exchanger 210. Because draining openings 208 lie directly above tube 212, water 236 drips onto the highest point of tube 212a, after which it spreads uniformly toward both sides of tube 212a. The water then flows to the underside of tube 212a, where it collects and drips onto the highest point of tube 212b. The same takes place with tube 212b and 212c. The water then drips onto lower plate 225, through notches 213 and to discharge 230.

Drain 206 is provided with drain height H1. During use of draining device 204 water level W of water 236 has a height H2 on side 240. In the shown embodiment height H1 is 11 mm and in the shown embodiment height H2 is 7 mm. Side 240 can be positioned lower than side 238 of drain 206, for instance due to non-level placing. Height H3 of water level W on side 238 is hereby 5 mm in the shown embodiment. Because water level W is at least half the drain height H1 in the case of horizontal placing, it is ensured that there is a water level over whole drain 206 when draining device 204 is placed non-level, whereby the whole heat exchanger 210 is used for exchange of heat.

In the shown embodiment upright edge 209a on the inner side of drain 206 functions as support point for cover 222. Hereby, edge 209a supports cover 222. In the shown embodiment cover 222 takes a domed form. Domed means that cover 222 takes an arcuate or curved form. Upper side 223 and underside 225 of cover 222 take a curved form. Underside 225 hereby has in the centre of cover 222 a distance A to imaginary line B which extends from lower edge 227a to lower edge 227b. Cover 222 has a diameter smaller than the recess of housing 224. Hereby, cover 222 does partially overhang drain 206, but a distance C removed from housing 224. Water cavitys 242 are arranged on underside 225 of cover 222, above draining openings 208. Hereby, the water will not leak over underside 225 to the centre of cover 222 beyond water cavity 242.

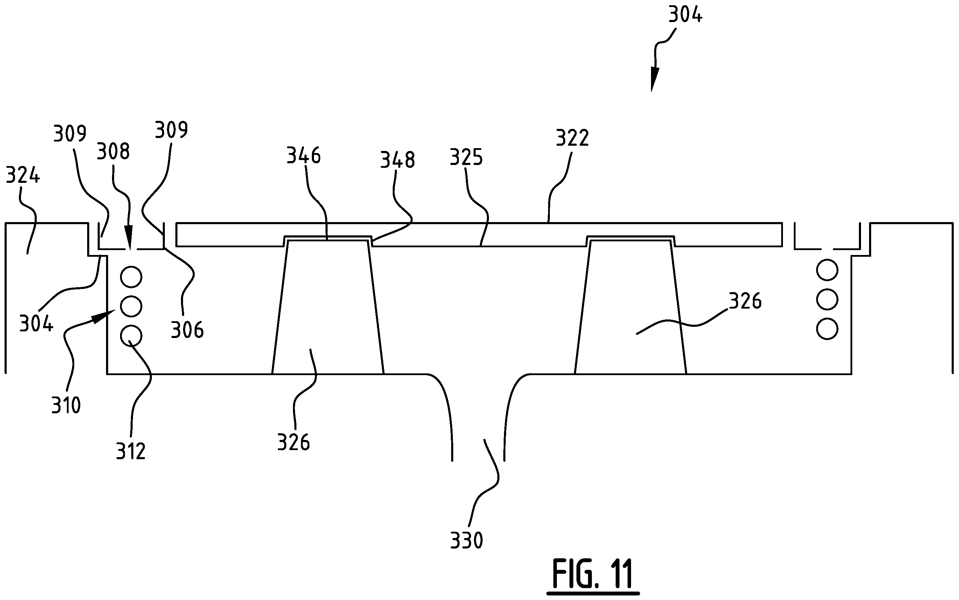

Draining device 304 (figure 11) shows an embodiment which is largely identical to figures 1-3, with the difference that no covering is arranged over drain 306. Cover 322 further supports on support parts 326. Upper surface 346 of support parts 326 is arranged here in recess 346 on underside 325 of cover 322. Shifting of cover 322 is hereby prevented, and cover 322 can still be removed in simple manner for cleaning.

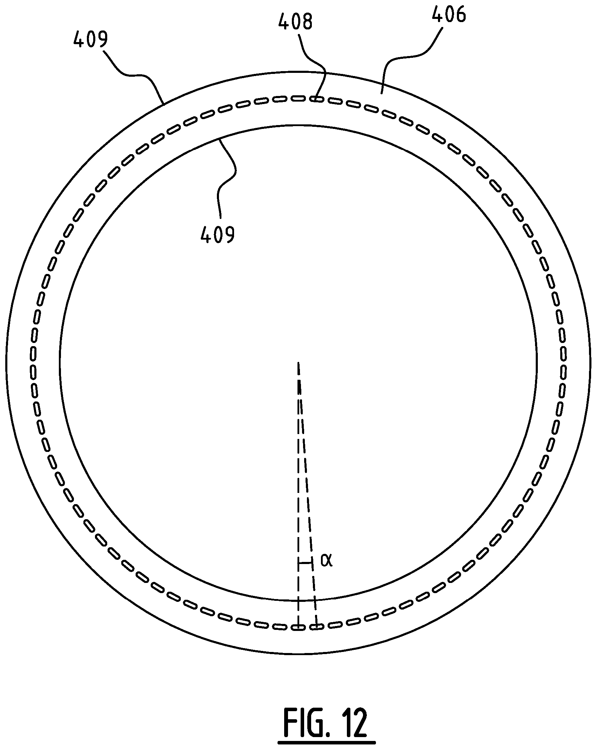

Drain 406 (figure 12) is provided with draining openings 408. A total of 90 draining openings 408 are distributed uniformly over the centre line between upright edges 409. Angle a between two adjacent draining openings 408 is thereby four degrees. The diameter of an individual draining opening 408 is 2.8 mm, resulting in the individual passage area amounting to about 6.1 mm². The overall passage area of all draining openings 408 together amounts to about 554 mm².

Draining openings 408 are elongate and extend in the direction in which drain 406 extends. In the shown embodiment drain 406 takes a circular form. This means that draining openings 408 extend in a direction parallel to the periphery of circular drain 406. An advantage hereof is that draining openings 408 are easier to clean, since the bristles of a cleaning brush can be moved through the holes. In that case the bristles of the cleaning brush are preferably moved in the elongate direction of draining openings 408.

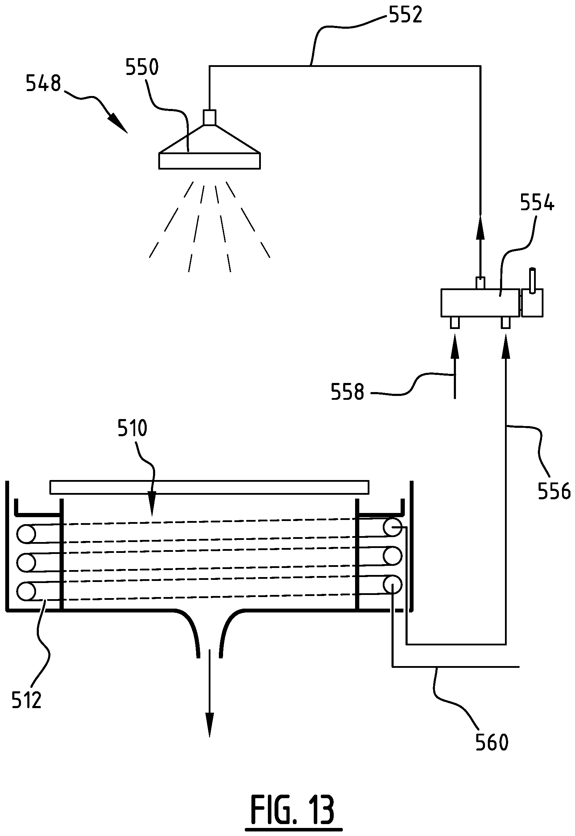

Shower 548 (figure 13) comprises shower head 550 which is connected to feed conduit 552. Heated water flowing out of heat exchanger 510 is fed to mixer tap 554 via warm water conduit 556. This water is mixed with hot water coming from hot water conduit 558. Cold water conduit 560 supplies cold water to tube 512 of heat exchanger 510, such that it can be heated by the used shower water.

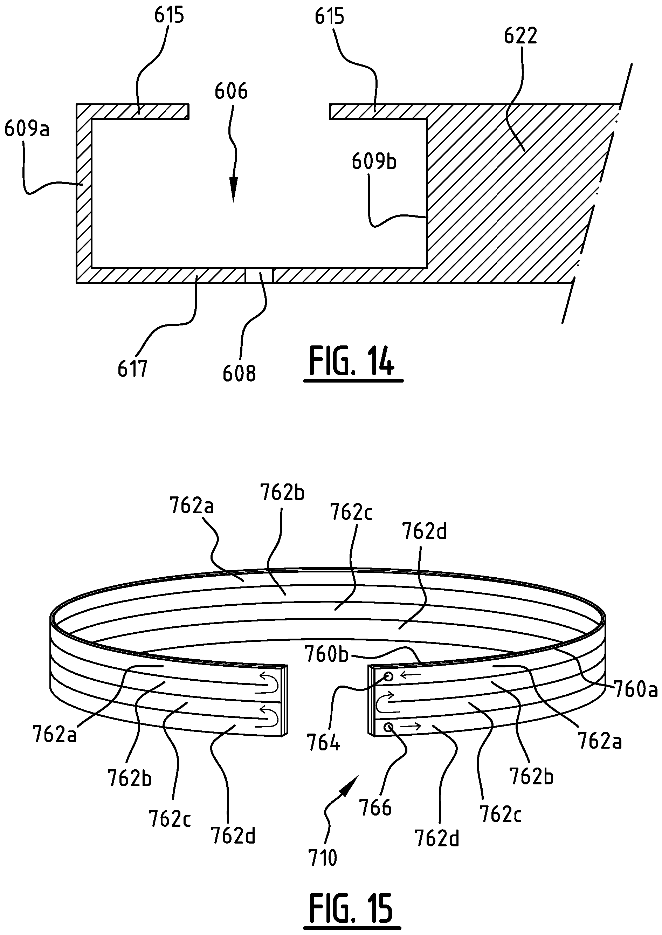

Drain 606 (figure 14) is connected fixedly to cover 622. Drain 606 is provided with draining openings 608 and has a first upright wall 609a and second upright wall 609b which is formed by cover 622. Roof elements 615 are arranged at the upper outer end of first upright wall 609a and second upright wall 609b. Roof elements 615 extend substantially perpendicularly of first upright wall 609a and second upright wall 609b, and parallel to lower wall 617 of drain 606. Roof elements 615 make the whole of drain 606 and cover 622 easy to remove from the draining device, for instance for the purpose of cleaning it. Removal of drain 606 and cover 622 can be realized by placing a finger under roof element 615.

Heat exchanger 710 (figure 15) is embodied as a dimple plate and comprises two stainless steel plates 760a, 760b. Channels 762a, 762b, 762c and 762d are formed between stainless steel plates 760a, 760b. Channels 762a, 762b, 762c and 762d can be seen as tubes of heat exchanger 710. Incoming cold water is fed into inlet 766, which water then flows through channels 762 and is discharged through discharge 764 as heated water.

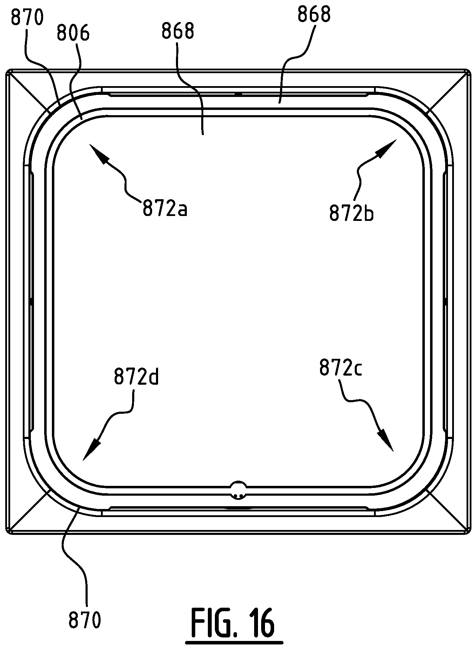

Drain 806 (figure 16) extends along outer edge 870 of housing 868. In the shown embodiment outer edge 870 has a rectangular form with rounded corners 872a, 872b, 872c, 872d. Because drain 806 extends along outer edge 870, the length of drain 806, and thereby the length of the heat exchanger lying under drain 806, is maximized.

The present invention is by no means limited to the above described embodiments thereof. The rights sought are defined by the following claims, within the scope of which many modifications can be envisaged.

## Claims

1. Draining device configured to recover heat from used shower water, comprising of:
- a drain which is provided with a drain height, wherein draining openings are arranged in a lowest part of the drain; and
- a heat exchanger which is arranged under the drain and which is provided with at least one tube, wherein the tube is positioned substantially under the draining openings such that shower water flows through the draining openings and onto the tube of the heat exchanger during use,
wherein the draining openings are formed such that, during use, a height of a water level of the shower water situated in the drain is at least half the drain height.

2. Draining device according to claim 1, wherein a ratio between the height of the water level during use and the drain height is at least 0.6, preferably at least 0.7, and is most preferably at least 0.8.

3. Draining device according to claim 1 or 2, wherein the draining openings together have an overall passage area, wherein the overall passage area of the draining openings lies in the range of 500-800 mm², preferably lies in the range of 650-750 mm², and most preferably lies in the range of 600-700 mm², for instance 650 mm², such that said water level of the shower water is achieved during use at a flow rate of the shower water in the range of 8-14 litres/minute.

4. Draining device according to claim 1, 2 or 3, wherein the draining device is arranged in a housing, wherein the drain is embodied as a continuous drain positioned around the centre of the housing, wherein the drain follows an outer edge of the housing.

5. Draining device according to claim 4, wherein the outer edge of the housing is rectangular.

6. Draining device according to any one of the foregoing claims, wherein the draining openings are elongate and extend in a direction equal to the direction in which the drain extends.

7. Draining device according to any one of the foregoing claims, further comprising a covering arranged above the drain, wherein the covering preferably has a reverse U-shape, wherein the U-shape comprises two legs which are connected by a middle part and wherein the legs extend downward from the middle part, wherein the covering is preferably provided with covering openings in the middle part of the covering, wherein the covering is preferably provided with covering openings in the legs of the covering.

8. Draining device according to any one of the foregoing claims, wherein the draining device comprises a housing and arranged thereon a cover configured to support a showering person, wherein the cover is preferably arranged overhanging the drain, wherein the cover is preferably domed, wherein the cover preferably comprises a water cavity which is positioned on an underside of the cover, wherein the water cavity is preferably positioned substantially vertically above the drain, wherein the cover is preferably connected releasably to a housing.

9. Draining device according to any one of the foregoing claims, wherein the draining openings are formed such that the shower water flows onto the tube of the heat exchanger in dropwise manner.

10. Draining device according to any one of the foregoing claims, wherein the number of draining openings lies in the range of 60 to 120, preferably lies in the range of 70 to 110, and most preferably lies in the range of 80 to 100, and wherein a passage area of the draining openings lies in the range of 3 to 20 mm², preferably lies in the range of 5 to 15 mm², most preferably lies in the range of 6 to 8 mm².

11. Draining device according to any one of the foregoing claims, wherein the overall passage area of the draining openings lies in the range of 180-2400 mm², preferably lies in the range of 350-1650 mm², and most preferably lies in the range of 480-800 mm², and/or wherein the draining openings of the drain are distributed uniformly over the drain in one row, one behind the other.

12. Draining device according to any one of the foregoing claims, wherein the tube of the heat exchanger is spiral-shaped, and wherein the tube preferably comprises three windings, and/or wherein the width of the drain lies in the range of 1-5 cm, preferably in the range of 2-4 centimetres, and is most preferably 3 centimetres.

13. Shower tray provided with a draining device according to any one of the foregoing claims.

14. Shower provided with a draining device according to any one of the claims 1-12 and/or a shower tray according to claim 13.

15. Method for recovering heat, comprising of:
- providing a draining device according to any one of the claims 1-12, a shower tray according to claim 13 and/or a shower according to claim 14; and
- using the shower, whereby shower water flows through the draining openings in the drain onto the tube of the heat exchanger.
